# NEW EUROPEAN PATENT SPECIFICATION

(11) **EP 2 536 895 B2**
(45) Date of publication and mention of the opposition decision: **03.08.2022**
(45) Mention of the grant of the patent: 08.05.2019
(21) Application number: 11744324.2
(22) Date of filing: 18.02.2011
(51) Int. Cl.: E04C 2/12, E04C 2/24, B32B 21/04, B27D 1/04, F41H 5/04

(54) **METHOD FOR MANUFACTURING COMPOSITE PANEL**
HERSTELLUNGSVERFAHREN FÜR EIN VERBUNDPANEEL
PROCÉDÉ DE FABRICATION POUR UN PANNEAU COMPOSITE

(30) Priority: 19.02.2010 FI 20105162
(43) Date of publication of application: 26.12.2012
(73) Proprietor: Metsäliitto Osuuskunta, 02100 Espoo (FI)
(72) Inventor: SOKKA, Kasperi, 40520 Jyväskylä (FI)
(74) Representative: Laine IP Oy
(86) International application number: PCT/FI2011/050151
(87) International publication number: WO 2011/101546

(56) References cited:
- EP-A1- 0 692 423
- EP-A1- 1 199 157
- WO-A1-98/29240
- WO-A1-03/084746
- WO-A1-2004/065116
- WO-A1-2007/116126
- WO-A2-2010/119431
- CN-Y- 201 236 411
- DE-A1- 19 603 073
- DE-A1- 19 603 073
- DE-A1- 19 603 073
- DE-A1- 19 844 431
- DE-U1-202007 009 532
- FR-A1- 2 563 153
- FR-A1- 2 872 085
- FR-A1- 2 872 085
- GB-A- 1 027 503
- GB-A- 2 191 147
- GB-A- 2 191 147
- GB-A- 2 447 562
- JP-A- H07 314 594
- US-A- 3 575 786
- US-A- 4 844 763
- US-A- 5 772 830
- US-A1- 2007 256 379
- US-A1- 2007 275 247
- US-A1- 2009 205 277
- "Finnish plywood" In: "Handbook of Finnish plywood", 2002 pages 1-68,

## Description

The present invention relates to a method of producing a composite panel, which method is specified in Claim 1.

### BACKGROUND TO THE INVENTION

Different composite panels or compound boards are already known, and these boards are made by combining wood-based material and at least one other material. In the production of composite panels, it is an aim to maximise the useful properties of the materials and to minimise the weaknesses. Previously, one known way to make composite panels was to mix various raw materials with each other in order to construct the composite panel. It is also known that composite panels are made by coating for example a wooden board with different materials.

Also previously known is that various compression methods are employed in the production of different boards.

### PURPOSE OF THE PRESENT INVENTION

It is a purpose of the present invention to provide a novel method for producing composite panels which combines a range of properties that are consistent with the purpose for which that board will be used.

### SUMMARY OF THE PRESENT INVENTION

The method of producing a composite panel, according to the present invention, is characterized by what is stated in the claims. The present invention is based on a composite panel which is formed of layers of a wood-based material and at least two layers of another material. The composite panel according to the present invention is comprised of more than one layer of a wood-based material and at least two functional layers, and at least two functional layers are arranged in at least one space between two layers of wood-based materials, and the functional layer is chosen from the following group: a sound-proof layer, a thermal insulation layer, a moisture-barrier layer, a reinforcement layer, and a flame-proof layer, and combinations thereof. The layers are stacked one upon the other in a predetermined order, layers of adhesive are arranged between the layers in order to attach the layers to each other, and the layers are compressed together by using a single compression in order to form a composite panel.

In the present context, composite panel means any compound board which is formed by layers which are formed of a wood-based material, and at least one layer of another material.

In the present context, wood-based material means wood veneer such as softwood or hardwood veneer. The thickness of the wood veneer may vary. In an embodiment, the thickness of the wood veneer ranges between 0.5 and 6 mm. In another embodiment, the wood veneer is generated by lathing, cutting or sawing.

In the present context, adhesive layer means an intermediate layer, the purpose of which is to attach layers of different materials to each other, and which is formed of any adhesive that is known *per se*, for instance resin, phenol-formaldehyde glue, melamine-formaldehyde glue, urea-formaldehyde glue and/or polyurethane glue or other adhesive which is suitable for the purpose.

In the present context, single compression means a method in which all the desired component layers, i.e. material layers and adhesive layers, are stacked at the same time to form a blank, and the board is generated in one compression stage.

In one embodiment of the present invention, at least one functional layer is arranged onto the surface of the composite panel in order to form a surface layer.

According to the present invention at least two functional layers are arranged between two layers of wood-based material. In another embodiment, at least three functional layers are placed between layers of wood-based material. In another embodiment, at least four functional layers are placed between layers of wood-based material.

In one embodiment of the present invention, at least one functional layer is arranged in more than one of the spaces between two layers of wood-based material.

In one embodiment of the present invention, at least one reinforcement layer is arranged, as a functional layer, between two layers of wood-based material.

In one embodiment of the present invention, a functional layer is a cellular board. The cellular board advantageously lightens the structure. The cellular board can be any cellular material which is suitable for the purpose of use and which is known *per se.*

In one embodiment of the present invention, a functional layer is a layer of insulating material.

In one embodiment of the present invention, a functional layer is formed of polymer-based material. In another embodiment, the polymer-based material can preferably comprise polyethylene, polypropylene, polyamide, aramid, carbon fibre, resin, cellulose, cellulose ester, cellulose ether, or other polymer or plastic, which are suitable for the purpose, or different combinations thereof.

In one embodiment of the present invention, a functional layer is formed of metal-based material.

In one embodiment, a functional layer is formed of polymer-based material, metal-based material or different combinations thereof.

In one embodiment, a sound-proof layer is formed of cellular board, polyurethane insulation material, cork material, cork composite material or other sound-proof material which is suitable for the purpose of use.

In one embodiment, a thermal insulation layer is formed of cellular board, polyurethane insulation material, cork material, cork composite material or other thermal insulation material which is suitable for the purpose of use.

In one embodiment, a reinforcement layer is formed of polyester-based material, glass, basalt, carbon, asbestos, wollastonite, silicates, or different combinations thereof. In one embodiment, the reinforcement layer is formed essentially together with the layer of glue, for instance by arranging a suitable reinforcement material into the glue layer, or by impregnating the reinforcement layer with an adhesive, in which case a combined layer of glue and reinforcement is advantageously generated.

In one embodiment, a moisture-barrier layer is formed of polymer-based material, which can be any polymer or plastic based material which is suitable for the purpose of use, for instance one of the polymer-based materials listed above.

In one embodiment, a flame-proof layer is formed metal-based material, for instance aluminum film, or other flame-proof material which is suitable for the purpose of use.

At least one ballistic layer can be arranged as a functional layer together with the composite panel. In one embodiment, the surface layer is a ballistic layer, preferably a ballistic shield layer. In one embodiment, the ballistic layer is arranged between layers of wood-based material. In one embodiment, the ballistic layer is formed of metallic material, metal-based material, or rock, mineral or ceramic based material, or different combinations thereof, and the ballistic layer can be in a platelike, board-like or film-like form, depending on the application. In one embodiment, it is also possible to create the ballistic layer of fibres which possess ballistic properties, or other materials which possess ballistic properties. In one embodiment, material which possesses ballistic properties, for instance fibres or ceramic plate material, can be arranged in conjunction with another functional layer to form compound layers, the properties of which vary. Here, ballistic shield means protection against flying objects, preferably splinters or bullets.

In one embodiment, the surface layer can be a reinforcement layer, a moisture-barrier layer, a flame-proof layer, an insulation material layer, or a combination of different layers.

Furthermore, the present invention relates to a method according to Claim 1.

It is possible to coat the composite panel with any suitable coating.

Furthermore, any of the composite panels described above can be used as building material and/or protective material, such as thermal insulation material, sound-proof material, moisture-barrier material, door material or flame-proof material, or as a protective board, such as a ballistic shield or a similar shield.

The composite panel can be used as floor, wall or ceiling material in permanent or temporary solutions outdoors and indoors. In addition, it is possible to use a composite panel as base material of a floor, for instance as a base plate of parquet floors or laminate floors.

Considerable advantages are achieved with a composite panel according to the present invention, compared with the known technology.

A composite panel according to the present invention is a strong, light and durable board structure.

A versatile composite panel which combines many properties is achieved with the present invention. A composite panel according to the present invention enables, for instance, simultaneous thermal insulation, sound-proof, moisture-barrier, reinforcement and flame-proof properties, and ballistic protection of the board material.

Thanks to the present invention, a single board serves several simultaneous purposes in the same application.

### LIST OF FIGURES

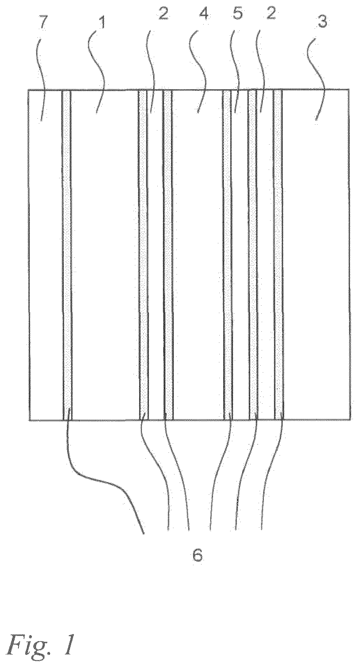

Figure 1 is a simplified diagram of a composite panel, which is not a claimed invention.

### DETAILED DESCRIPTION OF THE INVENTION

In the following, an example, useful for understanding the invention but outside the invention, is described with the help of a detailed example of an application, and reference to the accompanying figure 1.

The composite panel shown in figure 1 is intended to be used simultaneously both as a building material and a protective material, such as thermal insulation material, sound-proof material, moisture-barrier material and flame-proof material. It is possible to use the composite panel as, for instance, a ballistic shield or as a door material, or floor, wall or ceiling material.

In the composite panel shown in figure 1, it is possible to use wood-based veneers which are known *per se* as wood-based material (1, 3)

The composite panel in figure 1 comprises a first wood-based veneer layer (1), three different functional layers (2, 4, 5) and a second wood-based veneer layer (3). The functional layers (2, 4, 5) are placed between the layers of veneer (1, 3). The functional layers of the composite material comprise two reinforcement layers (2), and a cellular board layer (4) and an aluminum film layer (5) which are arranged between them. The reinforcement layers (2) are formed of natural fibres and/or synthetic fibres or staple fibres thereof. Onto the outer surface of the first wood-based veneer layer (1) of the composite panel a surface layer (7) is arranged as a ballistic shield layer, which is formed of a ceramic plate. All the material layers (1, 2, 3, 4, 5) are attached to each other by layers of glue (6), which comprise an adhesive which is suitable for the application.

The composite panel produced according to the method according to the present invention is suitable to be used as different embodiments in a great variety of applications.

The present invention is not limited to apply only to the example described above, rather many variations are possible according to the appending claims.

## Claims

1. A method of producing a composite panel, which comprises more than one wood-based material layer (1, 3) and at least two functional layers (2, 4, 5, 7),
wherein all
the layers (1, 2, 3, 4, 5, 7) are stacked one upon the other in a predetermined order, and between the layers are arranged layers of adhesive (6) in order to attach the layers to each other, and
wherein
the wood-based material layers are wood-based veneer layers,
wherein
more than one layer of wood-based veneer and at least two functional layers are stacked one upon the other, and at least two functional layers are arranged in at least one space between two wood-based veneer layers (1, 3), the at least two functional layers between the veneer layers being selected from the following group: a sound-proof layer, a thermal insulation layer, a moisture-barrier layer, a reinforcement layer, and a flame-proof layer, and combinations thereof, and said layers of adhesive (6) are arranged between the layers in order to attach the layers to each other,
**characterized in that** at least one of the two functional layers (2, 4, 5) is a sound-proof layer or thermal insulation layer formed of cork composite material and all the layers are compressed together by using a single compression,
wherein said single compression comprises a method in which all material layers and adhesive layers are stacked at the same time to form a blank, and the composite panel is generated in one compression stage.

2. A method according to claim 1,
**characterized in that** at least one functional layer is arranged in more than one space between two layers of wood-based material.

## Patentansprüche

1. Herstellungsverfahren für ein Verbundpanel, das mehr als eine auf Holz basierende Materialschicht (1, 3) und mindestens zwei Funktionsschichten (2, 4, 5, 7) umfasst,
wobei alle der Schichten (1, 2, 3, 4, 5, 7) in einer vorbestimmten Reihenfolge übereinander gestapelt sind und zwischen den Schichten Klebstoffschichten (6) angeordnet sind, um die Schichten aneinander zu befestigen, und
wobei die auf Holz basierenden Materialschichten auf Holz basierende Furnierschichten sind,
wobei mehr als eine Schicht aus auf Holz basierender Furnier und mindestens zwei Funktionsschichten übereinander gestapelt sind und mindestens zwei Funktionsschichten in mindestens einem Raum zwischen zwei auf Holz basierenden Furnierschichten (1, 3) angeordnet sind, wobei die mindestens zwei Funktionsschichten zwischen den Furnierschichten aus der folgenden Gruppe ausgewählt sind: einer schalldichten Schicht, einer Wärmeisolierungsschicht, einer Feuchtigkeitssperrschicht, einer Verstärkungsschicht und einer schwer entflammbaren Schicht und Kombinationen davon, und die Klebstoffschichten (6) zwischen den Schichten angeordnet sind, um die Schichten aneinander zu befestigen,
**dadurch gekennzeichnet, dass** mindestens eine der zwei Funktionsschichten (2, 4, 5) eine schalldichte Schicht oder Wärmeisolierungsschicht ist, die aus Korkverbundmaterial gebildet ist, und alle Schichten mit einem einzigem Pressvorgang zusammengepresst werden,
wobei der einzige Pressvorgang ein Verfahren umfasst, in dem alle Materialschichten und Klebstoffschichten gleichzeitig gestapelt werden, um einen Rohling zu bilden, und das Verbundpanel in einer Pressvorgangsphase erzeugt wird.

2. Verfahren nach Anspruch 1,
**dadurch gekennzeichnet, dass** mindestens eine Funktionsschicht in mehr als einem Raum zwischen zwei Schichten aus auf Holz basierendem Material angeordnet ist.

## Revendications

1. Procédé de fabrication d'un panneau composite, qui comprend plus d'une couche de matériau à base de bois (1, 3) et au moins deux couches fonctionnelles (2, 4, 5, 7),
dans lequel toutes les couches (1, 2, 3, 4, 5, 7) sont empilées les unes sur les autres dans un ordre prédéterminé, et entre les couches sont disposées des couches d'adhésif (6) afin de fixer les couches les unes aux autres, et
dans lequel les couches de matériau à base de bois sont des couches de placage à base de bois,
dans lequel plus d'une couche de placage à base de bois et au moins deux couches fonctionnelles sont empilées l'une sur l'autre, et au moins deux couches fonctionnelles sont disposées dans au moins un espace entre deux couches de placage à base de bois (1, 3), les au moins deux couches fonctionnelles entre les couches de placage étant sélectionnées parmi le groupe suivant : une couche insonorisante, une couche d'isolation thermique, une couche de barrière à l'humidité, une couche de renforcement, et une couche ignifuge, ainsi que des combinaisons de celles-ci, et lesdites couches d'adhésif (6) sont disposées entre les couches afin de fixer les couches les unes aux autres,
**caractérisé en ce que** l'une au moins des deux couches fonctionnelles (2, 4, 5) est une couche insonorisante ou une couche d'isolation thermique formée de matériau composite en liège et toutes les couches sont comprimées ensemble à l'aide d'une seule compression,
dans lequel ladite seule compression comprend un procédé dans lequel toutes les couches de matériau et couches d'adhésif sont empilées en même temps pour former une ébauche, et le panneau composite est généré en un seul stade de compression.

2. Procédé selon la revendication 1, **caractérisé en ce qu'**au moins une couche fonctionnelle est disposée dans plus d'un espace entre deux couches de matériau à base de bois.
